# EUROPEAN PATENT APPLICATION

(11) **EP 1 519 291 A1**
(43) Date of publication of application: **30.03.2005**
(21) Application number: 04253388.5
(22) Date of filing: 07.06.2004
(51) Int. Cl.: G06F 17/60, G06F 1/00

(54) **Information processing method and apparatus for managing sales of software**

(30) Priority: 11.06.2003 JP 2003166694
(71) Applicant: CANON KABUSHIKI KAISHA, Ohta-ku, Tokyo (JP)
(72) Inventor: Tanaka, Mitsuharu, Tokyo (JP); Naito, Kikuo, Tokyo (JP); Inose, Tsutomu, Tokyo (JP); Kasai, Kazuhiro, Tokyo (JP); Tanaka, Daisuke, Tokyo (JP)
(74) Representative: Beresford, Keith Denis Lewis

(57) **Abstract**

A license information issuing server according to this invention selects a product type corresponding to a sales form for software in accordance with an instruction from a user, and registers the selected product type in a database in association with identification information of software. The apparatus issues license information for the software registered in the database, which is required to install the software. This makes it possible to effectively perform sales management of software while issuing license information for the software.

## Description

### FIELD OF THE INVENTION

The present invention relates to an information processing method and apparatus for managing the sales of software.

### BACKGROUND OF THE INVENTION

Conventionally, in a license information issuing system for software to be installed in information processing apparatuses, software of the same version/same edition has been managed based on the assumption of one sales entity, distribution channel, or the like.

The conventional license information issuing system cannot therefore separately manage software for each sales method including a sales entity, distribution channel, presence/absence of license conditions, registration/non-registration of device numbers, and the like.

### SUMMARY OF THE INVENTION

The present invention has been made to address the problem in the prior art described above.

According to the present invention, sales management of software can be effectively performed while license information is issued for the software.

According to the present invention, there is provided an information processing apparatus comprising selection means for selecting a product type corresponding to a sales form for software, registration means for registering the product type selected by the selection means in a database in association with identification information of the software, and license information issuing means for issuing license information necessary for installation of the software registered in the database.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a view showing the arrangement of a license information issuing apparatus according to an embodiment of the present invention;
Fig. 2 is a block diagram showing a license information issuing apparatus according to the embodiment of the present invention;
Fig. 3 is a view showing an application list window in the embodiment of the present invention;
Fig. 4 is a view showing a product type designation window in the embodiment of the present invention;
Fig. 5 is a view showing a product registration window in the embodiment of the present invention;
Fig. 6 is a view showing a product selection window displayed when a license access number is to be issued in the embodiment of the present invention;
Fig. 7 is a view showing a license access number issuing window in the embodiment of the present invention;
Fig. 8 is a view showing a license access number input window in the embodiment of the present invention;
Fig. 9 is a view showing a license information file issuing window in the embodiment of the present invention;
Fig. 10 is a view showing a license information file acquisition window in the embodiment of the present invention;
Fig. 11 is a view showing a product registration window having no license condition designation item in the embodiment of the present invention;
Fig. 12 is a view showing a product selection window displayed when license information is to be issued in the embodiment of the present invention;
Fig. 13 is a view showing a license information issuing window in the embodiment of the present invention;
Fig. 14 is a view for explaining a software management database in the embodiment of the present invention;
Fig. 15 is a flowchart for product registration processing in the embodiment of the present invention;
Fig. 16 is a flowchart for license access number issuing processing in the embodiment of the present invention;
Fig. 17 is a flowchart for license information issuing processing by a user in the embodiment of the present invention; and
Fig. 18 is a flowchart for license information issuing processing by a sales company and software developer in the embodiment of the present invention.

### DETAILED DESCRIPTION OF THE PREFERRED EMBODIMENT

A preferred embodiment of the present invention will now be described in detail with reference to the drawings. It should be noted that the relative arrangement of the components, the numerical expressions and numerical values set forth in these embodiments do not limit the scope of the present invention unless it is specifically stated otherwise.

In this embodiment, the term "application" means a unit of development of software which is developed by a software developer to allow execution of specific processing on an information processing apparatus. The term "product" means a unit of sales which defines an application registered in this system by specifying a sales entity, distribution channel, license conditions, and the like. One product includes one or more packages. The term "package" means a unit of purchase by the user. After purchasing one or more packages, the user uses the software contained in the package upon installing it in his/her information processing apparatus.

### <Description of Apparatus>

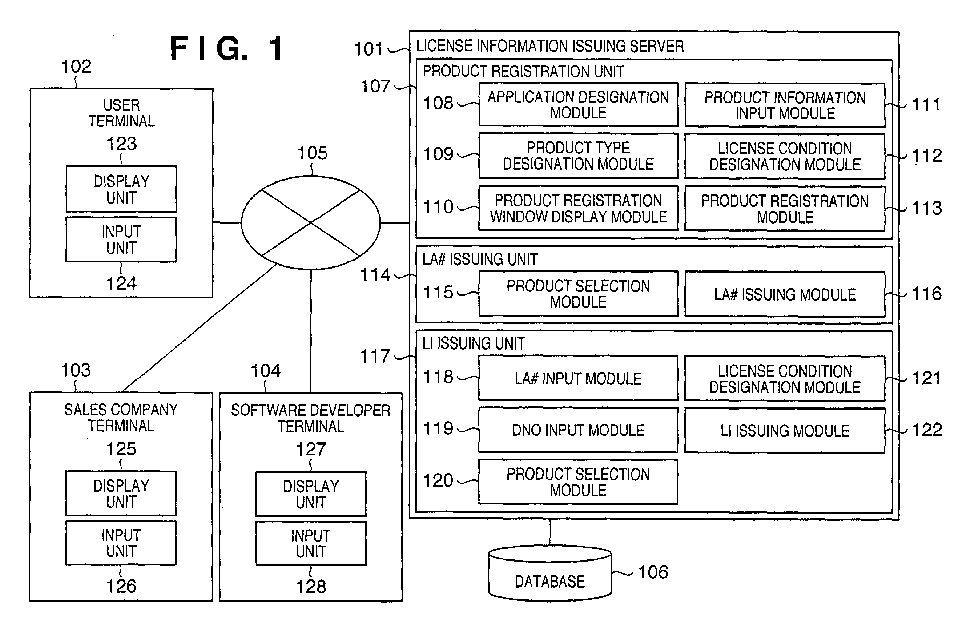

Fig. 1 is a view showing the arrangement of a network system including an information processing apparatus according to a preferred embodiment of the present invention. This network system is designed to manage software and to prevent unauthorized use of software, in particular. This system can issue license information in return for inputting of a device number uniquely identifying an apparatus in which software is to be installed.

Referring to Fig. 1, reference numeral 101 denotes a license information issuing server serving as an information processing apparatus for controlling overall license information issuing processing; and 102, a user terminal serving as an information processing apparatus managed by the user. Any kind of information processing apparatus, e.g., a personal computer, portable terminal, printer, or copying machine, which can be connected to a network and allows installation of software, can serve as the user terminal 102. Reference numeral 103 denotes a sales company terminal serving as an information processing apparatus managed by a sales company; and 104, a software developer terminal serving as an information processing apparatus managed by a software developer. A personal computer or workstation can serve as the sales company terminal 103 or software developer terminal 104.

Reference numeral 105 denotes a network such as the Internet, through which the user terminal 102, sales company terminal 103, and software developer terminal 104 are connected to the license information issuing server 101; and 106, a database which is connected to the license information issuing server 101 and stores application information, product information including license information (LI), actor information, license access number (LA#) information, and device number (DNO) information. A license access number is the number uniquely assigned to a software package. This number is required to request the license issuing server to issue license information. A device number is the number uniquely assigned to an apparatus in which software is to be installed. This number is required to request the license information issuing server to issue license information specifying an apparatus. It suffices if this number is information necessary for access for the purpose of acquiring a license. For example, this information may be a code including characters or symbols. In this case, the information may be called as a license access code or device code.

Reference numeral 107 denotes a product registration unit included in the license information issuing server 101. The product registration unit 107 includes an application designation module 108, product type designation module 109, product registration window display module 110, product information input module 111, license condition designation module 112, and product registration module 113.

Reference numeral 114 denotes an LA# issuing unit which is included in the license information issuing server 101 and includes a product selection module 115 and LA# issuing module 116; 117, an LI issuing unit which is included in the license information issuing server 101 and includes an LA# input module 118, DNO input module 119, product selection module 120, license condition designation module 121, and LI issuing module 122; 123, a display unit included in the user terminal 102; 124, an input unit included in the user terminal 102; 125, a display unit included in the sales company terminal 103; 126, an input unit included in a sales company terminal; 127, a display unit included in the software developer terminal 104; and 128, an input unit included in a software developer terminal.

In order to install software managed by this system into an information processing apparatus managed by the user, license information issued from the license information issuing server 101 is always required. The license information issuing server 101 issues license information in response to authorized access through the network 105. Identification information unique to an information processing apparatus in which software is to be installed can be embedded in the license information. In this case, when the same software is to be installed in another apparatus, different license information is required. This makes it possible to prevent unauthorized copying of software.

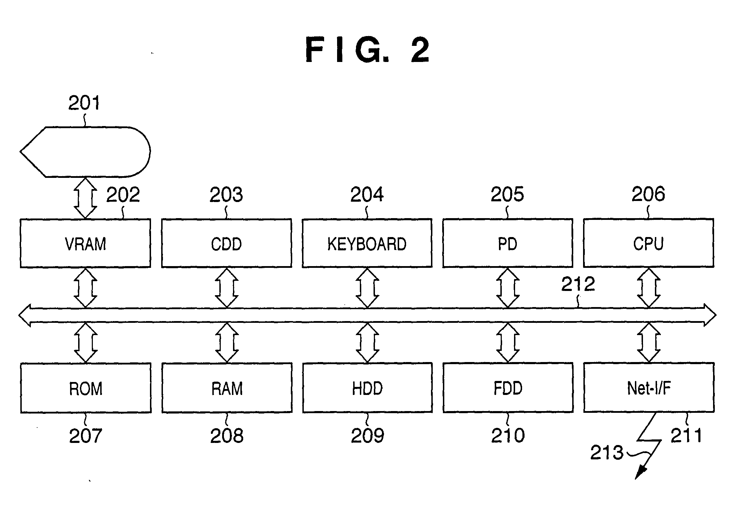

Fig. 2 is a block diagram showing the schematic arrangement of the license information issuing server 101.

Referring to Fig. 2, reference numeral 201 denotes a display device having a display screen on which user interface information such as windows, icons, messages, and menus is displayed; and 202, a VRAM in which an image to be displayed on the display device 201 is drawn. The image data created in the VRAM 202 is transferred to the display device 201 in accordance with a predetermined format, thereby displaying the image on the display device 201. Reference numeral 203 denotes a CDD (Compact Disk Drive) which is a device for reading and writing various kinds of control programs and data from and to recording media such as a CD-ROM and CD-R. This device may be a DVD drive.

Reference numeral 204 denotes a keyboard having various kinds of keys for inputting characters; 205, a PD (Pointing Device) which is used to, for example, designate an icon, menu, or another object displayed on the display screen of the display device 201; 206, a CPU which controls each device connected to a CPU device on the basis of the control programs stored in a ROM 207, an HDD (Hard Disk Drive) 209, an FDD (Flexible Disk Drive) 210, and the CDD 203; 207, the ROM (Read Only Memory) which holds various kinds of control programs and data; and 208, a RAM (Random Access Memory) having the work area of the CPU 206, a save area for data at the time of error processing, a load area for a control program, and the like.

Reference numeral 209 denotes the HDD which stores various kinds of control programs and data; 211, a network interface (Net-I/F) which can communicate with another information processing apparatus, printer, or the like through a network 213; and 212, a CPU bus which includes an address bus, data bus, and control bus. Control programs can be provided from the ROM 207, HDD 209, FDD 210, and CDD 203 to the CPU 206, or can be provided from other information processing apparatuses through the network 213.

The hardware arrangement of the license information issuing server 101 has been described above with reference to Fig. 2. The user terminal 102, sales company terminal 103, and software developer terminal can adopt the same arrangement as that shown in Fig. 2.

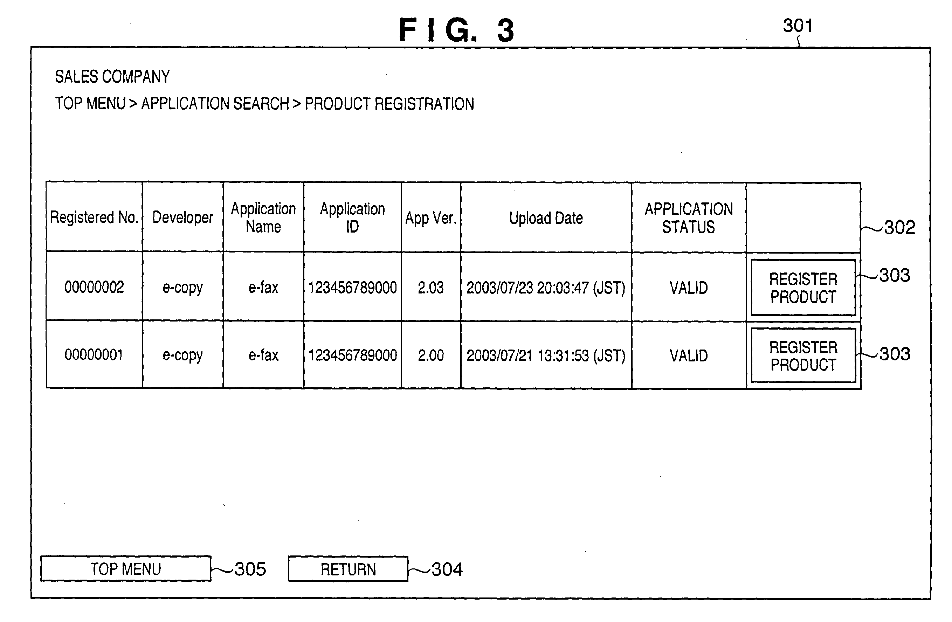

The operation of the license information issuing server 101 according to this embodiment will be described with reference to Figs. 3 to 14.

Fig. 3 is a view showing an application designation window provided by the license information issuing server 101. Upon reception of access from the sales company terminal 103 through the network 105, the license information issuing server 101 transmits display data for displaying the window shown in Fig. 3 to the sales company terminal 103.

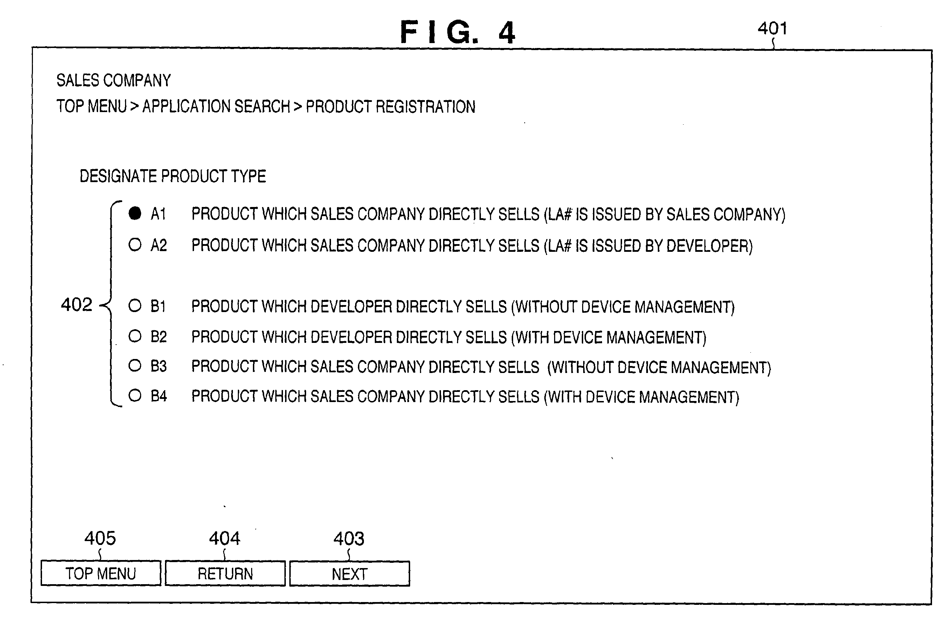

Referring to Fig. 3, reference numeral 301 denotes a product registration application designation window, on which an application list 302 and [Register Product] button 303 are displayed. In product registration, a sales company operator displays this window first, and then designates an application to be registered as a product from the application list registered in the system. When the [Register Product] button 303 is selected, the window shown in Fig. 4 is displayed. When a [Return] button 304 is selected, the previous window is displayed. When a [Top Menu] button 305 is selected, the Top Menu window is displayed.

Fig. 4 is a view showing a product type designation window provided by the license information issuing server 101. Upon reception of access from the sales company terminal 103 through the network 105, the license information issuing server 101 transmits display data for displaying the window shown in Fig. 4 to the sales company terminal 103.

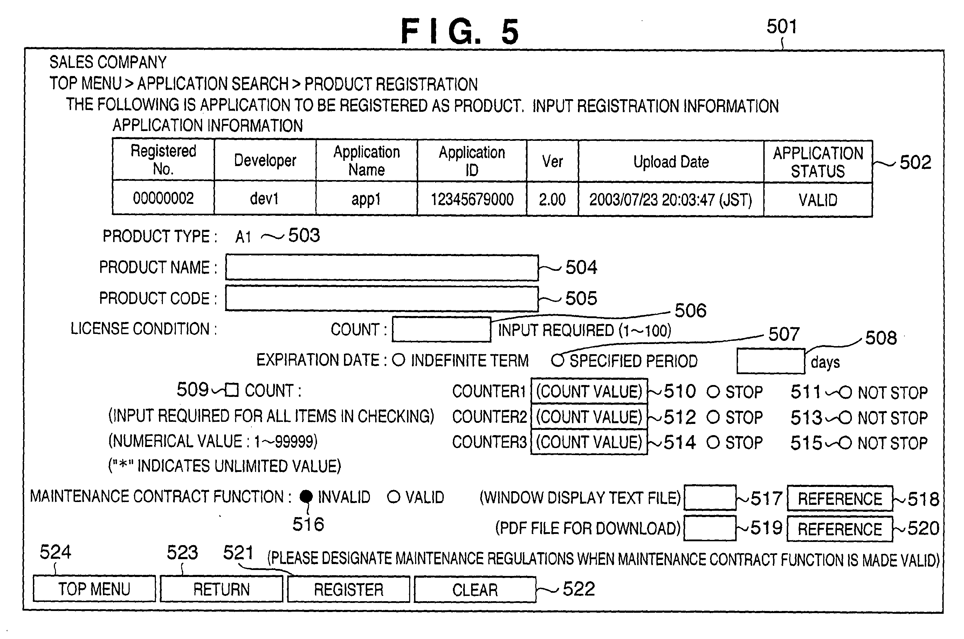

Referring to Fig. 4, reference numeral 401 denotes a product type designation window, on which selection radio buttons 402 for selectable product types are displayed. When a product type to be registered on the window in Fig. 4 is selected and a [Next] button 403 is selected, the window shown in Fig. 5 is displayed.

When a [Return] button 404 is selected, the previous window is displayed. When a [Top Menu] button 405 is selected, the Top Menu window is displayed.

Product type A1 is a product to be sold by a sales company serving as a sales entity. For this product, license conditions and the presence/absence of a maintenance contract function have been registered. The sales company acquires a license access number from the license information issuing server 101, and sells the product upon including it in a software package. Upon purchasing the package, the user inputs a license access number and the device number of a computer as an installation target to the license information issuing server 101 to acquire license file information, and then installs the product in the information processing apparatus.

Product type A2 is a product to be sold by a sales company serving as a sales entity. For this product, license conditions and the presence/absence of a maintenance contract function have been registered.
A software developer acquires a license access number from the license information issuing server 101, and includes the product in a software package. Upon purchasing the package, the user inputs a license access number and the device number of an information processing apparatus as an installation target to the license information issuing server 101 to acquire license information, and then installs the product in the information processing apparatus.

Product type B1 is a product to be sold by a software developer serving as a sales entity. For this product, no license conditions have been registered. The software developer acquires license information from the license information issuing server 101 by designating license conditions, and sells the product upon including it in a software package.

Product type B2 is a product to be sold by a software developer serving as a sales entity. For this product, no license conditions have been registered. The software developer acquires license information from the license information issuing server 101 by designating license conditions and the device number of an information processing apparatus as an installation target, and sells the product upon including it in a software package.

Product type B3 is a product to be sold by a sales company serving as a sales entity. For this product, no license conditions have been registered. The sales company acquires license information from the license information issuing server 101 by designating license conditions, and sells the product upon including it in a software package.

Product type B4 is a product to be sold by a sales company serving as a sales entity. For this product, no license conditions have been registered. The sales company acquires license information from the license information issuing server 101 by designating license conditions and the device number of an information processing apparatus as an installation target, and sells the product upon including it in a software package.

Fig. 5 is a view showing a product registration window provided by the license information issuing server 101. Upon reception of access from the sales company terminal 103 through the network 105, the license information issuing server 101 transmits display data for displaying the window shown in Fig. 5 to the sales company terminal 103. More specifically, upon detecting that product type A1 or A2 is selected and the [Next] button 403 is selected in Fig. 4, the license information issuing server 101 transmits the window information in Fig. 5 to the terminal which has been displaying the window shown in Fig. 4.

Referring to Fig. 5, reference numeral 501 denotes a product registration window, on which the following are displayed: information 502 of an application as a product registration target, a selected product type 503, a product name input box 504, a product code input box 505, a license count input box 506, a license expiration date type designation radio button 507, a license expiration date input box 508 for a case wherein the license expiration date falls within a predetermined interval, a counter condition designation check box 509, a count value input box 510 for counter 1, a stop/non-stop designation button 511 for counter 1, a count value input box 512 for counter 2, a stop/non-stop designation button 513 for counter 2, a count value input box 514 for counter 3, a stop/non-stop designation button 515 for counter 3, a valid/invalid designation button 516 for a maintenance contract function, a file name input box 517 for the display of a maintenance contract term window, a file name designation button 518 for the display of the maintenance contract term window, a file name input box 519 for the downloading of maintenance contract terms, a file name designation button 520 for the downloading of maintenance contract terms, a [Register] button 521, a [Clear] button 522, a [Return] button 523, and a [Top Menu] button 524.

Upon checking the contents of an application as a product registration target on this window, the sales company operator inputs a product name, product code, license count, license expiration date, license count information, and maintenance contract information, and selects the [Register] button 521. With this operation, product registration can be done. When the operator selects the [Clear] button 522, all the contents input after this window is displayed are cleared. When the operator selects the [Return] button 523, the previous window is displayed. When the operator selects the [Top Menu] button 524, the Top Menu window is displayed.

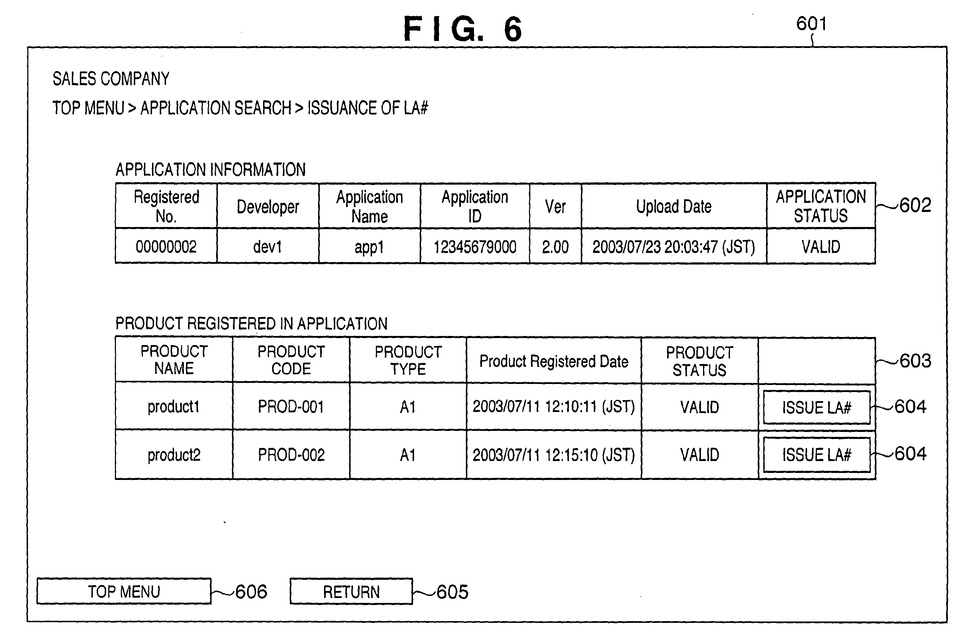

Fig. 6 is a view showing a license access number issuance product designation window provided by the license information issuing server 101. Upon reception of access from the sales company terminal 103 or software developer terminal 104 through the network 105, the license information issuing server 101 transmits display data for displaying the window shown in Fig. 6 to the sales company terminal 103 or software developer terminal 104.

Referring to Fig. 6, reference numeral 601 denotes a license access number issuance product designation window, on which application information 602, a product list 603 registered in the application, an [Issue LA#] button 604, a [Return] button 605, and a [Top Menu] button 606 are displayed.

When issuing a license access number, an operator in the sales company or software developer displays this window first, and then designates a product for which a license access number is to be issued from the product list registered in a target application of the applications registered in the system.

When the operator selects the [Return] button 605, the previous window is displayed. When the operator selects the [Top Menu] button 606, the Top Menu window is displayed.

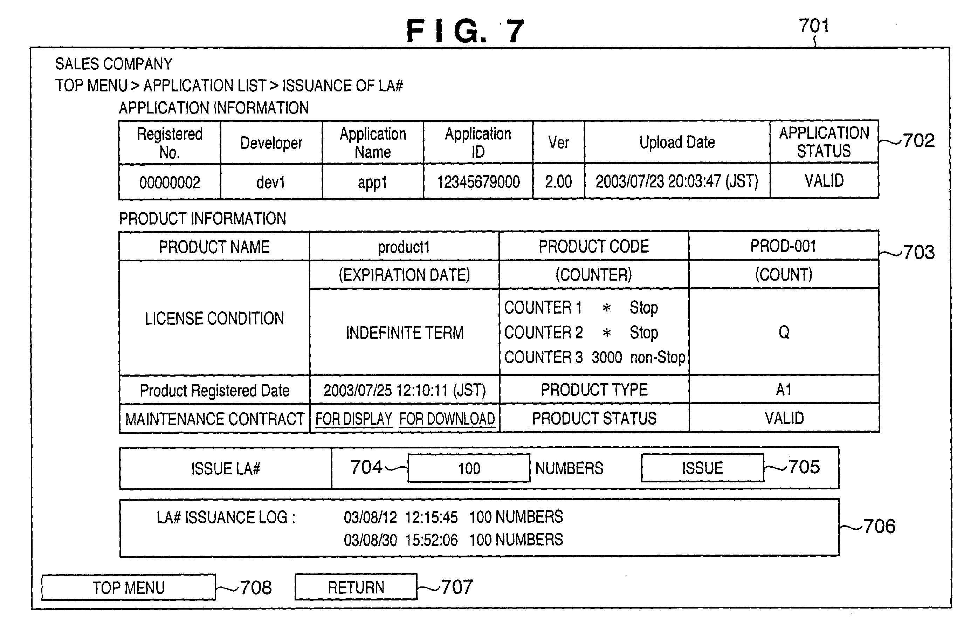

Fig. 7 is a view showing a license access number issuing window in the license information issuing server 101. Upon detecting that the [Issue LA#] button 604 is selected while the window shown in Fig. 6 is displayed on the sales company terminal 103 or software developer terminal 104, the license information issuing server 101 transmits display data for displaying the window shown in Fig. 7 to the terminal which has been displaying the window shown in Fig. 6.

Referring to Fig. 7, reference numeral 701 denotes a license access number issuing window, on which the following are displayed: application information 702, product information 703 which is registered in the application and the license access number issuance target designated on the previous window, a license count input box 704 for the issuance of license access numbers, an [Issue] button 705, a license access number issuance log display 706, a [Return] button 707, and a [Top Menu] button 708.

The operator in the sales company or software developer inputs a license count 704 for the issuance of license access numbers, and selects the [Issue] button 705, thereby giving an instruction to issue a license access number.

When the operator selects the [Return] button 707, the previous window is displayed. When the operator selects the [Top Menu] button 708, the Top Menu window is displayed.

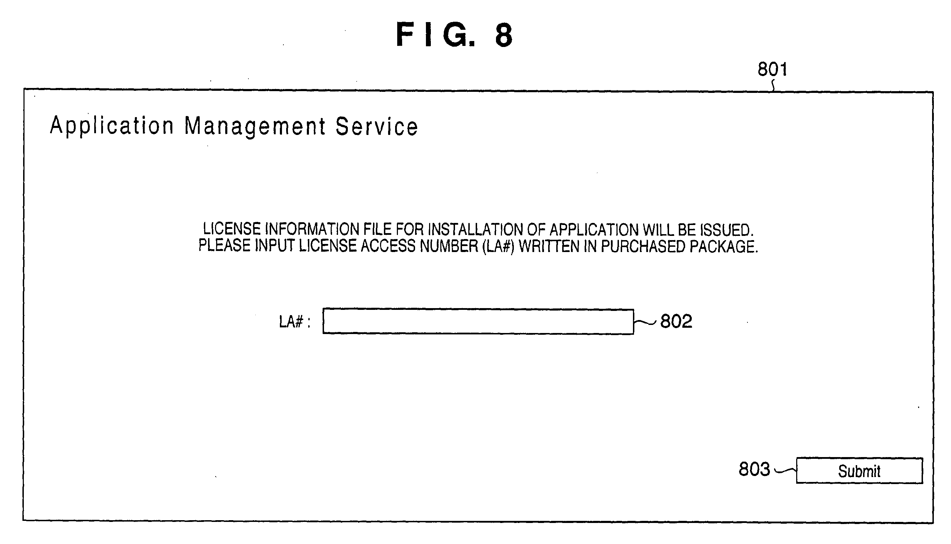

Fig. 8 is a view showing a license access number input window provided by the license information issuing server 101. Upon reception of access from the user terminal 102 through the network 105, the license information issuing server 101 transmits display data for displaying the window shown in Fig. 8 to the user terminal 102.

Referring to Fig. 8, reference numeral 801 denotes a license access number input window, on which a license access number input box 802 and Submit button 803 are displayed.

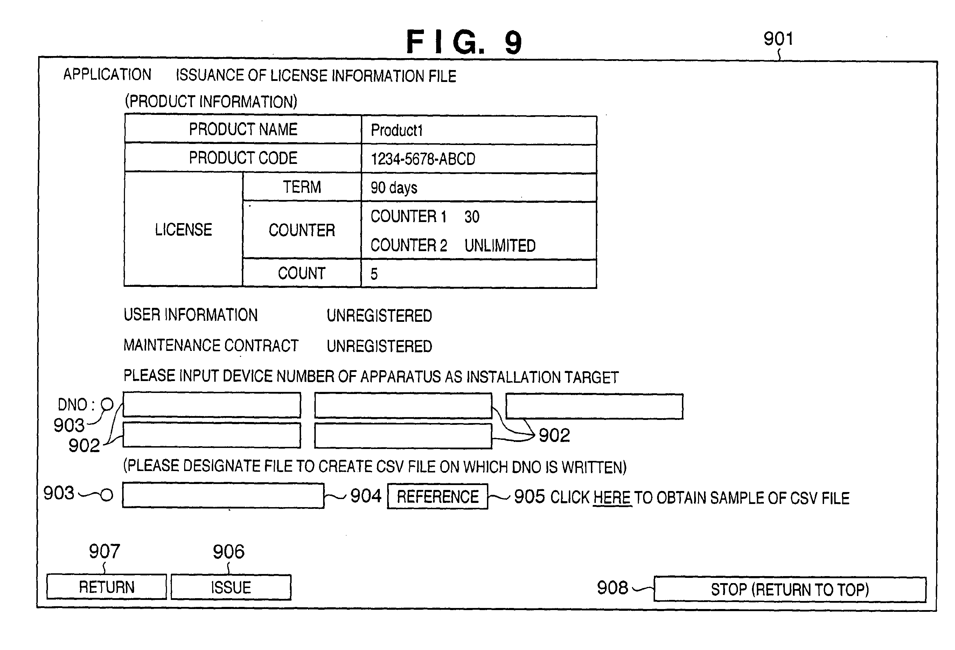

When issuing license information, the user displays this window first, and then inputs the license access number written on the purchased software package to the input box, and selects the Submit button. When the Submit button is selected, the window shown in Fig. 9 is displayed.

Fig. 9 is a view showing a license information issuing window provided by the license information issuing server 101. Upon reception of information indicating that the Submit button 803 is selected on the user terminal 102, the license information issuing server 101 transmits display data for displaying the window shown in Fig. 9 to the user terminal 102.

Referring to Fig. 9, reference numeral 901 denotes a license information issuing window (written as "issuance of license information file" in Fig. 9), on which the following are displayed together with software information (written as "product information" in Fig. 9): device number input boxes 902, device number input method selection radio buttons 903, a device number file name input box 904, a device number file designation reference number 905, an [Issue] button 906 for giving an instruction to issue license information, a [Return] button 907 for returning to the previous window, and a [Stop] button 908 for stopping license information issuing processing itself.

The device number input boxes 902 are displayed by a number corresponding to a smaller one of the value obtained by subtracting an issued license count from the software license count and the maximum number of device number input boxes that can be displayed.

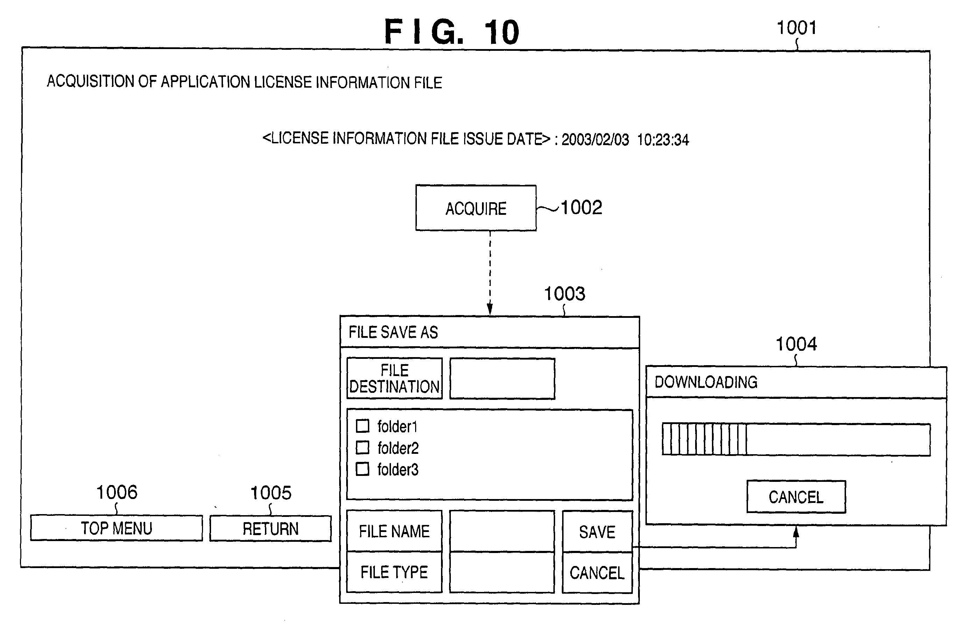

The user confirms on this window that the displayed software information coincides with the software contained in the package. The user then selects a device number designation method with the button 903. If the user selects the upper radio button, the device number of an information processing apparatus in which the software is to be installed is input into the device number input box 902. If the user selects the lower radio button, he/she inputs a device number file into the device number file name input box 904 through an absolute path. Alternatively, the user selects the device number file designation reference button 905 to display a file designation dialog box as a standard for the operating system, and designates a device number file. After designating a device number by any one of these methods, the user selects the [Issue] button 906, thereby creating license information, in a predetermined place in the license information issuing server 101, which is required to install the software in the apparatus corresponding to the input device number. Upon completion of the creation of the license information, the license information issuing server 101 transmits display data for displaying the window shown in Fig. 10 to the user terminal 102.

Fig. 10 is a view showing a license information acquisition window provided by the license information issuing server 101.

Referring to Fig. 10, reference numeral 1001 denotes a license information acquisition window (written as "license file acquisition" in Fig. 10), on which the following are display together with a license information issue date (written as "license file issue date" in Fig. 10): an [Acquire] button 1002 for giving an instruction to acquire license information, a [Return] button 1005 for returning to the previous window, and [Top Menu] button 1006 for returning to the Top Menu.

When the user selects the [Acquire] button 1002 on this window to acquire previously issued license information (file), a file designation dialog box 1003 as a standard for the operating system is displayed. When the user issues an instruction to store the license information by inputting an arbitrary license information (file) storage destination and a file name, a during-download dialog 1004 as a standard for the operating system is displayed. The information is then downloaded.

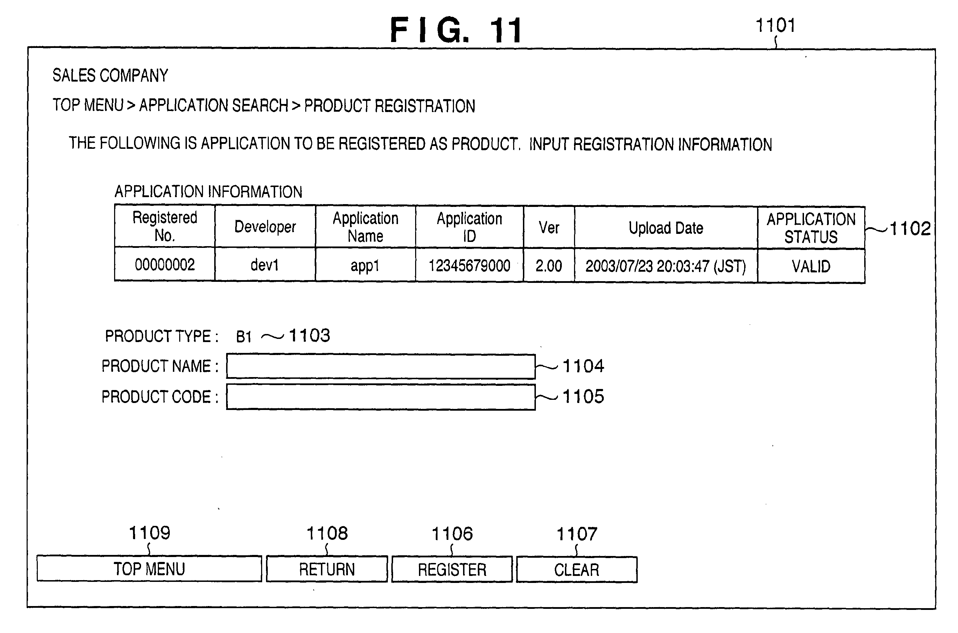

Fig. 11 is a view showing a product registration window provided by the license information issuing server 101 when a product type for which no license conditions are designated is selected at the time of product registration. Upon reception of access from the sales company terminal 103 through the Internet 105, the license information issuing server 101 transmits display data for displaying the window shown in Fig. 11 to the sales company terminal 103. More specifically, upon detecting that one of product types B1 to B4 is selected and the [Next] button 403 is selected in Fig. 4, the license information issuing server 101 transmits the window information in Fig. 11 to the terminal on which the window in Fig. 4 has been displayed.

Referring to Fig. 11, reference numeral 1101 denotes a product registration window, on which the following are displayed: information 1102 of an application as a product registration target, a selected product type 1103, a product name input box 1104, a product code input box 1105, a [Register] button 1106, a [Clear] button 1107, a [Return] button 1108, and a [Top Menu] button 1109.

In this window, the sales company operator checks the contents of an application as a product registration target. The operator then inputs a product name and product code, and selects the [Register] button 1106. With this operation, product registration can be done. When the operator selects the [Clear] button 1107, all the contents input after this window is displayed are cleared. When the operator selects the [Return] button 1108, the previous window is displayed. When the operator selects the [Top Menu] button 1109, the Top Menu window is displayed.

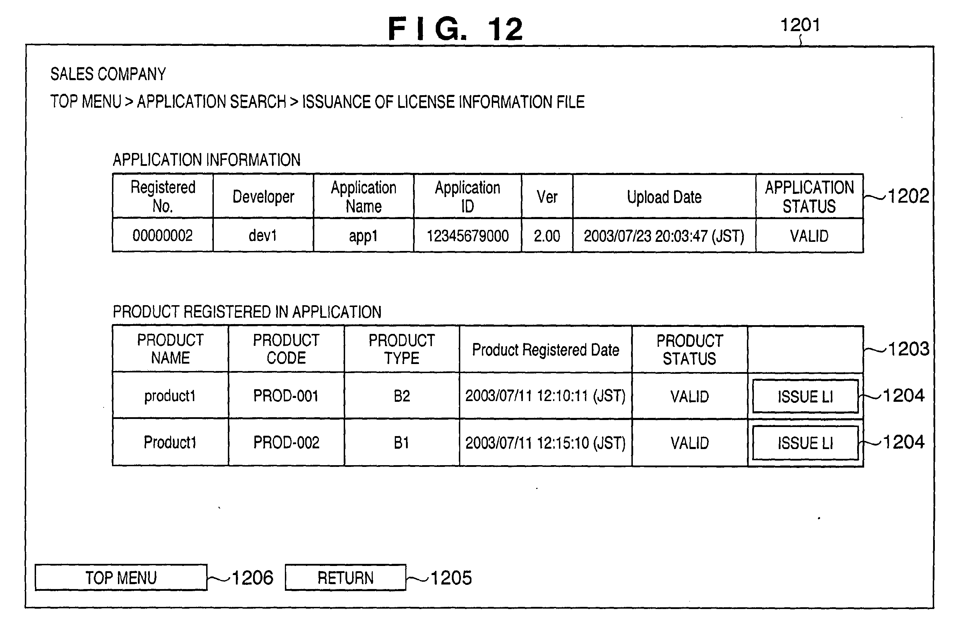

Fig. 12 is a view showing a license information file issuance target product designation window provided by the license information issuing server 101 when a sales company or software developer issues a license information file.

Referring to Fig. 12, reference numeral 1201 denotes a license information file issuance product designation window, on which the following are displayed: application information 1202, a product list 1203 registered in the application, an [Issue LI] button 1204, a [Return] button 1205, and a [Top Menu] button 1206.

When issuing a license information file, an operator in a sale company or software developer displays this window first, and then designates a product by selecting the [Issue LI] button 1204 for which a license information file is to be issued from the product list registered in a target application of the applications registered in the system.

When the operator selects the [Return] button 1205, the previous window is displayed. When the operator selects the [Top Menu] button 1206, the Top Menu window is displayed.

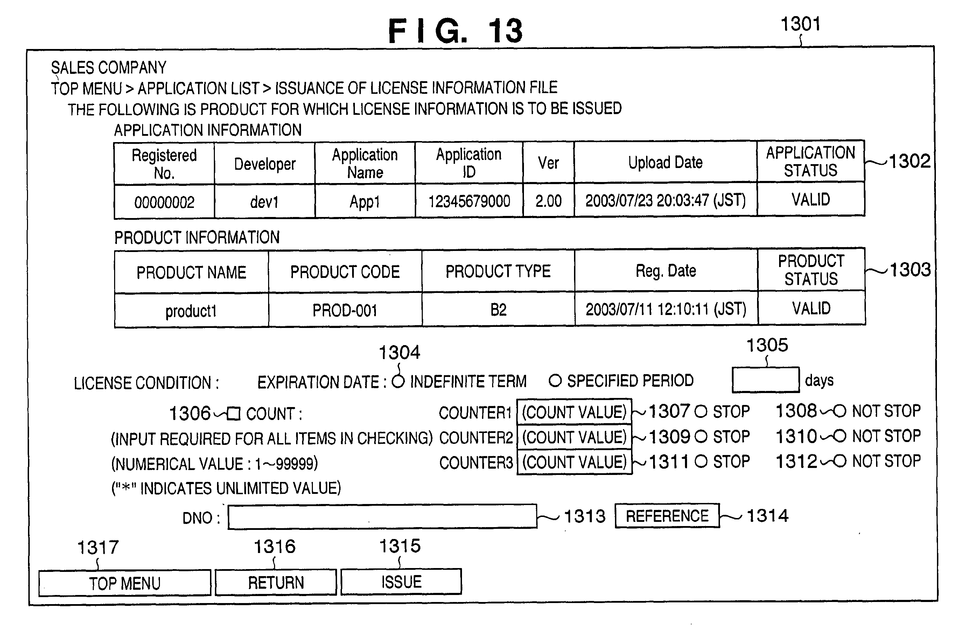

Fig. 13 is a view showing a license information file issuing window provided by the license information issuing server 101 when a sales company or software developer selects the [Issue LI] button 1204 to issue a license information file.

Referring to Fig. 13, reference numeral 1301 denotes a license information file issuing window, on which the following are displayed: information 1302 of an application as a license information file issuance target, selected product information 1303, a license expiration date type designation radio button 1304, a license expiration date input box 1305 for a case wherein the license expiration date falls within a predetermined interval, a count condition designation check box 1306, a count value input box 1307 for counter 1, a stop/non-stop designation button 1308 for counter 1, a count value input box 1309 for counter 2, a stop/non-stop designation button 1310 for counter 2, a count value input box 1311 for counter 3, a stop/non-stop designation button 1312 for counter 3, a device number input box 1313, a device number file designation button 1314, an [Issue] button 1315, a [Return] button 1316, and a [Top Menu] button 1317.

In this window, the operator checks the contents of an application as a license information file issuance target. The operator then inputs a license expiration date, license count information, and the device number of an information processing apparatus in which the software is to be installed, and selects the [Issue] button 1315. With this operation, a license information file can be issued. When the operator selects the [Return] button 1316, the previous window is displayed. When the operator selects the [Top Menu] button 1317, the Top Menu window is displayed.

When issuance of a license information file is complete, the window shown in Fig. 10 is displayed, and the operator can acquire the license information file.

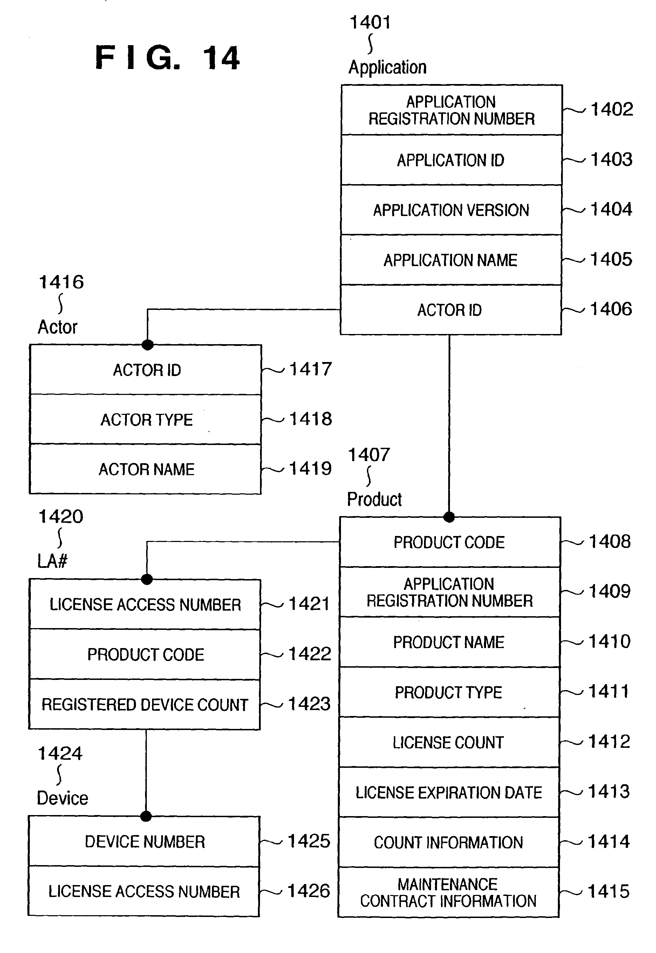

Fig. 14 is a view showing information stored in the database 106 connected to the license information issuing server 101. The information stored in the database 106 includes application information, product information including license information, actor information, license access number information, and device number information.

Reference numeral 1401 denotes an application table 1401, in which the following information uniquely identifying an application on this system is stored: an application registration number 1402, application ID 1403, application version 1404, application name 1405, and actor ID 1406.

Reference numeral 1407 denotes a product table, in which the following are stored: a product code 1408, application registration number 1409, product name 1410, product type 1411, license count 1412, license expiration date 1413, count information 1414, and maintenance contract information 1415. When product registration is executed in the windows shown in Figs. 3 to 5, the input information is stored in each field in this table. Since an application and products have a one-to-many relationship, a plurality of products can exist for a single application.

Reference numeral 1416 denotes an actor table, in which the following are stored: an actor ID 1417 which uniquely identifies a sales entity, an actor type 1418 which indicates the type of sales company or software developer, and an actor name 1419.

Reference numeral 1420 denotes a license access number table in which a license access number 1421, product code 1422, and registered device count 1423 are stored. Since a product and license access numbers have a one-to-many relationship, a plurality of license access numbers can exist for a single product.

Reference numeral 1424 denotes a device table in which a device number 1425 and license access number 1426 are stored. Since a license access number and devices have a one-to-many relationship, a plurality of devices can exist for a single license access number.

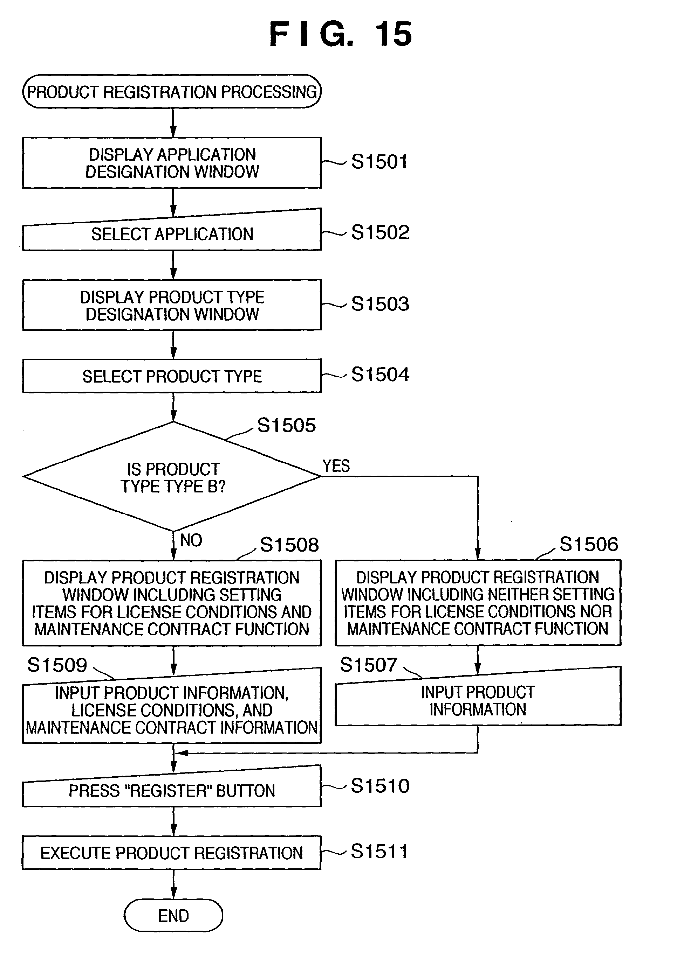

A processing sequence in the present invention will be described next with reference to the flowcharts of Fig. 15 to 18.

### (Registration of Application Product in License Information Issuing Server)

Fig. 15 is a flowchart for license product registration processing in the license information issuing server according to this embodiment.

When predetermined product registration processing start operation is performed, this flow is started. In step S1501, an application designation window (Fig. 3) is displayed on the screen display device of a sales company terminal. In step S1502, a sales company operator selects the [Register Product] button for an application subjected to product registration. When the [Register Product] button is selected, a product type designation window (Fig. 4) is displayed in step S1503. When the operator selects a product type and the [Next] button in step S1504, the flow advances to step S1505 to check whether the selected product type is type B (a product type for which no license conditions are designated). If type B is selected as a product type, a product registration window (Fig. 11) including no setting items for license conditions and maintenance contract function is displayed in step S1506. In step S1507, input of product information by the operator is accepted, and flow advances to step S1510. If type B is not selected as a product type in step S1505, a product registration window (Fig. 5) including setting items for license conditions and maintenance contract function is displayed in step S1508. In step S1509, input of product information, license conditions, and maintenance contract information by the operator is accepted, and the flow advances to step S1510. When the operator selects the [Register] button in step S1510, the product is registered in step S1511. This processing is then terminated.

### (Issuance of License Access Number of Application Product by License Information Issuing Server)

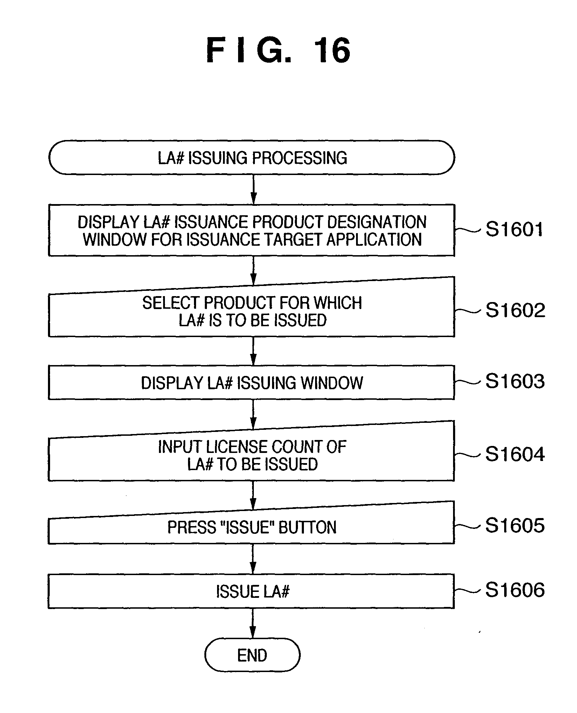

License access number issuing processing by a sales company or software developer will be described next with reference to the flowchart of Fig. 16.

When an operator in a sales company or software developer performs start operation for predetermined license access number issuing processing, this flow is activated. A license access number issuance designation window (Fig. 6) for an issuance target application is displayed in step S1601. In step S1602, selection of the [Issue LA#] button for a product for which a license access number is to be issued by the operator is accepted. In step S1603, a license access number issuing window (Fig. 7) is displayed. In step S1604, input of a license count of license access numbers issued by the operator is accepted. In step S1605, selection of the [Issue] button is accepted. When the [Issue] button is selected, license access numbers are issued in step S1606. This processing is then terminated.

### (Issuance of License Information of Application Product by License Information Issuing Server)

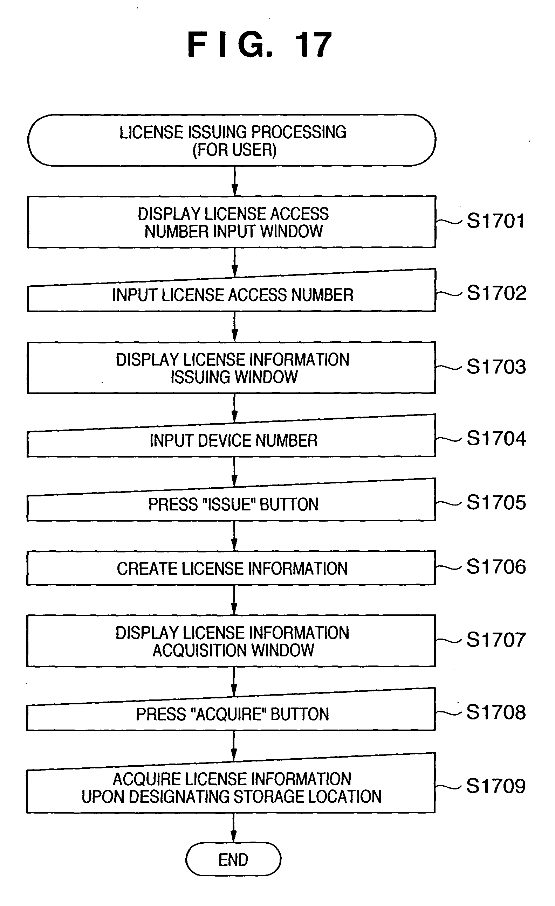

License information issuing processing by the user will be described next with reference to the flowchart of Fig. 17.

When the user performs predetermined license information issuing start operation, this processing is started. In step S1701, a license access number input window (Fig. 8) is displayed on the screen display device of the user terminal. In step S1702, input of a license access number by the user is accepted. When the license access number is input, a license information file issuing window (Fig. 9) is displayed in step S1703. In step S1704, input of a device number by the user is accepted. When input of the device number is completed, the user selects the [Issue] button in step S1705 to give an instruction to issue license information (file). When an instruction to issue license information is given, license information is created in step S1706. In step S1707, a license information acquisition window (Fig. 10) is displayed. When the user selects the [Acquire] button in step S1708 to acquire the created license information, a storage dialog as a standard for the operating system is displayed in step S1709. An arbitrary storage destination and file name are input, and the information is stored. The license information issuing processing is then terminated.

This embodiment has exemplified the case wherein the license information issuing server directly issues license information to the user. However, the server may issue license information to a software developer, and the software developer may transfer the issued license information to the user.

### (Issuance of License Information of Application Product by Sales Company or Software Developer)

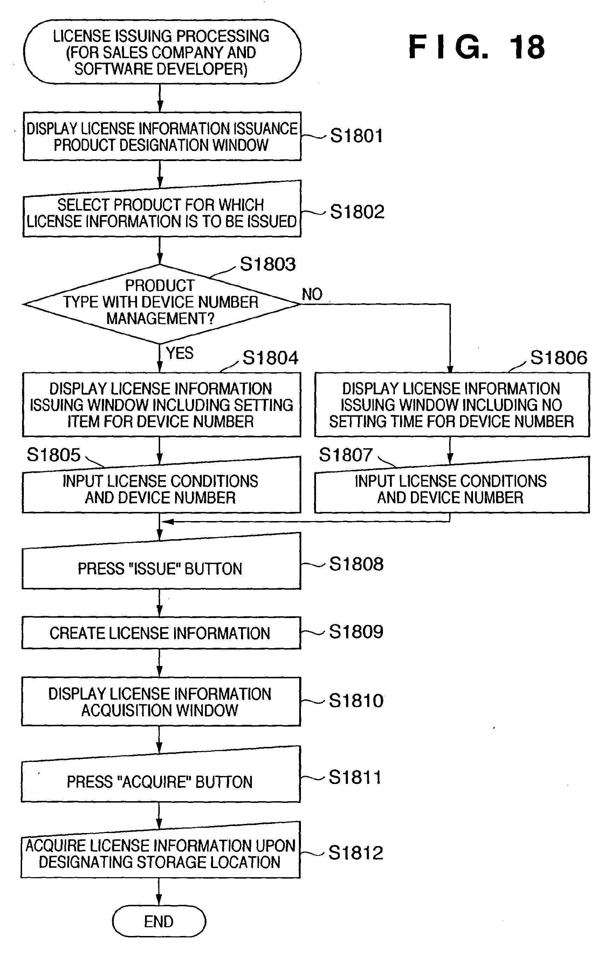

Fig. 18 is a flowchart for explaining license information issuing processing by a sales company or software developer.

When an operator in a sales company or software developer performs predetermined license information issuing start operation, this processing is started. In step S1801, a license information issuance product designation window (Fig. 12) for an issuance target application is displayed. In step S1802, selection of the [Issue LI] button for a product for which license information is to be issued by the operator is accepted. In step S1803, it is checked whether the product type of product for which the [Issue LI] button is selected is a product for which device number management is provided. If YES in step S1803, a license information issuing window (Fig. 13) including a setting item for a device number is displayed in step S1804.

In step S1805, the operator accepts input of license conditions and device number. The flow then advances to step S1808. If it is determined in step S1803 that the product type of product for which the [Issue LI] button is selected is not a product for which device number management is provided, a license information issuing window including no setting item for a device number is displayed in step S1806. In step S1807, the operator accepts input of license conditions. The flow then advances to step S1808.
When the operator accepts selection of the [Issue] button, and the [Issue] button is selected in step S1808, license information is created in step S1809.
In step S1810, a license information acquisition window (Fig. 10) is displayed. When the operator selects the [Acquire] button to acquire the created license information in step S1811, a storage dialog as a standard the operating system is displayed in step S1812. An arbitrary storage destination and file name are input, and the information is stored. The license information issuing processing is then terminated.

In this embodiment, the user is authenticated by using the license information issued in the above manner. The user then can install an application product in his/her device to add a function to the device. Authentication using license information can prevent an application product from being illicitly copied or installed.

### (Other Embodiment)

Although an embodiment has been described in detail above, the present invention can be applied to a system constituted by a plurality of devices, or to an apparatus comprising a single device.

The present invention incorporates a case wherein programs of software for implementing the functions of the embodiment described above are directly or remotely supplied to a system or apparatus to cause the computer of the system or apparatus to read out and execute the programs, thereby implementing the functions. In this case, the form of the present invention need not be programs as long as it has the functions of the programs.

The program codes themselves which are installed in the computer to allow the computer to implement the functions/processing of the present invention also realize the present invention. That is, the computer programs themselves, which implement the functions/processing of the present invention, are also incorporated in the present invention.

In this case, each program may take any form, e.g., an object code, a program executed by an interpreter, and script data supplied to an OS, as long as it has the function of the program.

As a recording medium for supplying the programs, a floppy (registered trademark) disk, hard disk, optical disk, magnetooptical disk, MO, CD-ROM, CD-R, CD-RW, magnetic tape, nonvolatile memory card, ROM, DVD (DVD-ROM or DVD-R), or the like can be used.

In addition, methods of supplying the programs include the following. A client computer connects to a homepage on the Internet by using a browser to download each computer program of the present invention itself from the homepage or download a compressed file containing an automatic install function into a recording medium such as a hard disk. Alternatively, the programs can be supplied by dividing the program codes constituting each program of the present invention into a plurality of files, and downloading the respective files from different homepages. That is, the present invention also incorporates a WWW server which allows a plurality of user to download program files for causing the computer to execute the functions/processing of the present invention.

In addition, the functions/processing of the present invention can be implemented by encrypting the programs of the present invention, storing the encrypted data in storage media such as CD-ROMs, distributing them to users, allowing users who satisfy a predetermined condition to download key information for decryption from a homepage through the Internet, executing the encrypted programs using the key information, and allowing a computer to install the programs.

The functions of the above embodiment are implemented not only when the readout programs are executed by the computer but also when the OS running on the computer performs part or all of actual processing on the basis of the instructions of the programs.

The functions of the above embodiment are also implemented when the programs read out from the storage medium are written in the memory of a function expansion board inserted into the computer or a function expansion unit connected to the computer, and the CPU of the function expansion board or function expansion unit performs part or all of actual processing on the basis of the instructions of the programs.

As has been described above, when product registration is to be executed for the sales of application software, one application can be registered as a plurality of different products in different sales forms and can be efficiently managed by designating a product type set in accordance with a sales entity for the product, a distribution channel, the presence/absence of license conditions, and registration/non-registration of a device number.

Product registration can be performed in the following form. A sales company or the like serving as the first sales entity issues a license access number for a product, and sells the product upon including it in a product package. Upon purchasing the package, the user inputs a license access number contained in the package and a device number which can uniquely identify an apparatus in which the software is to be installed, thereby acquiring license information.

Product registration can be performed in the following form. A developer or the like serving as the second sales entity issues a license access number for a product and includes the product in a product package. The first sales entity then sells the product package. Upon purchasing the package, the user inputs the license access number contained in the package and a device number which can uniquely identify an apparatus in which software is to be installed, and acquires license information.

In addition, product registration can be performed in the following form. The first sales entity registers a product as a product in which no license conditions are included. When the first sales entity is to acquire license information, the sales entity designates license conditions and acquires license information based on the designated license conditions. The license information is then sold upon being included in a product package.

Furthermore, product registration can be performed in the following form. When the first sales entity registers a product as the one in which no license conditions are included, and acquires license information, license conditions are designated. In addition, a device number which can uniquely identify an apparatus in which software is to be installed is input, and license information based on the designated license conditions and device number is acquired. The first sales entity then sells the product upon including the license information in a product package.

As many apparently widely different embodiments of the present invention can be made without departing from the spirit and scope thereof, it is to be understood that the invention is not limited to the specific embodiments thereof except as defined in the appended claims.

## Claims

1. . An information processing apparatus **characterized by** comprising:
selection means for selecting a product type corresponding to a sales form for software;
registration means for registering the product type selected by said selection means in a database in association with identification information of the software; and
license information issuing means for issuing license information necessary for installation of the software registered in the database.

2. The apparatus according to claim 1, **characterized in that** the product type is specified by at least one of a sales entity for the software, a distribution channel for the software, presence/absence of an issuing condition for the license information, and presence/absence of a condition for use of the software.

3. The apparatus according to claim 1 or 2, **characterized by** further comprising transmission means for transmitting display data for displaying a product registration window in accordance with the product type selected by said selection means, and
reception means for receiving registration information input on the product registration window, and
wherein said registration means registers the registration information in a database in association with the identification information of the software.

4. The apparatus according to any of claims 1 to 3, **characterized in that**
said selection means can select, as the product type, a type of a software, which includes a license access number acquired from the information processing apparatus by a first sales entity upon registering a license condition in the information processing apparatus, and which is sold to a user who acquires the license information in return for the license access number and a device number of an apparatus on which the software is installed, and
the apparatus further comprises
setting means for setting the license condition for the software from a terminal of the first sales entity,
transmission means for transmitting the license access number to the terminal of the first sales entity,
input means for inputting from a user terminal the license access number and the device number of the apparatus on which the software is installed, and
license information transmission means for transmitting the license information to the user terminal in accordance with the license condition when the license access number and the device number of the apparatus on which the software is installed are input from said input means.

5. The apparatus according to any of claims 1 to 3, **characterized in that**
said selection means can select, as the product type, a type of a software, which includes a license access number acquired by a second sales entity from the information processing apparatus, which is sold by the second sales entity to a first sales entity who registers a license condition in the information processing apparatus, and which is sold by the first sales entity to a user who installs the software in an apparatus upon acquiring the license information in return for the license access number and a device number of the apparatus, and
the apparatus further comprises
transmission means for transmitting the license access number to the terminal of the second sales entity,
setting means for setting the license condition from a terminal of the first sales entity,
input means for inputting, from a user terminal, the license access number and the device number of the apparatus on which the software is installed, and
license information transmission means for transmitting the license information to the user terminal in accordance with the license condition when the license access number and the device number of the apparatus on which the software is installed are input from said input means.

6. The apparatus according to any of claims 1 to 3, **characterized in that** said selection means can select, as the product type, a type of a software, which is sold upon including the license information acquired by a first sales entity which has designated a license condition, and
the apparatus includes acceptance means for accepting a request to issue the license information designating the license condition from a terminal of the first sales entity, and
license information transmission means for transmitting the license information corresponding to the license condition to the terminal of the first sales entity.

7. The apparatus according to any of claim 1 to 3, **characterized in that** said selection means can select, as the product type, a type of a software, which is sold upon including the license information acquired by a first sales entity by designating a license condition for the software and a device number of an apparatus on which the software is to be installed, and
the apparatus includes acceptance means for accepting a request to issue the license information designating the license condition and the device number from a terminal of the first sales entity, and
license information transmission means for transmitting license information corresponding to the license condition and the device number to the terminal of the first sale entity.

8. The apparatus according to any of claims 1 to 7, **characterized by** further comprising transmission means for transmitting display data for displaying a license information issuing window for issuing the license information in accordance with the product type.

9. An information processing method of registering software which needs a license for installation, **characterized by** comprising:
a step of transmitting display data for displaying a selection window for selecting a product type in accordance with a sales form for the software;
a step of transmitting display data for displaying a registration window in accordance with a product type selected on the selection window; and
a registration step of receiving product information input with respect to the registration window and registering the product information in a database in association with the software.

10. A program **characterized by** causing an information processing apparatus to execute steps included in an information processing method defined in claim 9.

11. An information processing method of registering software which needs a license for installation, **characterized by** comprising:
a step of transmitting display data for displaying a selection window for selection of the software as a product type which is sold with a license condition or a product type which is sold without any license condition;
a step of transmitting display data for displaying a registration window for registering product information including a license condition when a product type which is sold with a license condition is selected on the selection window;
a step of transmitting display data for displaying a registration window for registering product information excluding a license condition when a product type which is sold without any license condition is selected on the selection window; and
a registration step of receiving product information input to the registration window and registering the information in a database in association with the software.

12. A program **characterized by** causing an information processing apparatus to execute steps included in an information processing method defined in claim 11.

13. An information processing apparatus comprising:
means for generating a form allowing input of product information designating a type of product associated with a software application, and for transmitting the form to a remote device;
means for registering product information received in response to the transmission of the form;
means for generating and issuing license information necessary for installation of the product associated with the software application.
